# EUROPÄISCHE PATENTANMELDUNG

(11) **EP 4 779 282 A1**
(43) Veröffentlichungstag der Anmeldung: **22.07.2026**
(21) Anmeldenummer: 25226730.7
(22) Anmeldetag: 23.12.2025
(51) Int. Cl.: G01L 3/00, B64C 27/00, B64F 5/60, G01M 1/12, G01M 1/36, F01D 5/02

(54) **VORRICHTUNG UND VERFAHREN ZUM ÜBERPRÜFEN DER WUCHTBARKEIT VON ROTORBLÄTTERN UNTEREINANDER**

(30) Priorität: 16.01.2025 DE 102025101425
(71) Anmelder: Elbe Flugzeugwerke GmbH, 01109 Dresden (DE)
(72) Erfinder: Uhma, Peter, 01109 Dresden (DE); Fröhlich, Benjamin, 01109 Dresden (DE); Blüher, Lars, 01109 Dresden (DE); Herrberger, Henrik, 01109 Dresden (DE)
(74) Vertreter: LKGLOBAL Partnerschaftsgesellschaft mbB

(57) **Zusammenfassung**

Es wird eine Vorrichtung (1) und ein Verfahren (200) zum Überprüfen eines Ist-Zustands einer Rotationskomponente (100) bereitgestellt. Die Vorrichtung (1) umfasst ein Gestell (2), einen langgestreckten Aufnahmebalken (3), eine Aufnahme (4), ein erstes drehmomenterzeugendes Element (5), und eine Ablesevorrichtung (7). Der Aufnahmebalken (3) ist über eine Drehachse (8) mit dem Gestell (2) verbunden ist. Das erste drehmomenterzeugende Element (5) ist an einer ersten Seite (9) des Aufnahmebalkens (3) relativ zu der Drehachse (8) angeordnet. Die Aufnahme (4) ist an einer zweiten Seite (10) des Aufnahmebalkens (3) relativ zu der Drehachse (8) angeordnet. Die Aufnahme (4) ist konfiguriert, die Rotationskomponente (100) mit dem Aufnahmebalken (3) zu verbinden. Das erste drehmomenterzeugende Element (5) ist einstellbar, so dass ein von der ersten Seite (9) auf die Drehachse (8) wirkendes erstes Drehmoment (11) angepasst werden kann. Die Aufnahme (4) ist konfiguriert ein durch die Rotationskomponente (100) erzeugtes zweites Drehmoment (12) von der zweiten Seite (10) auf die Drehachse (8) zu übertragen. Die Ablesevorrichtung (7) ist konfiguriert, einen mit dem ersten Drehmoment (11) assoziierten Ablesewert anzuzeigen, der mit dem Ist-Zustand der Rotationskomponente assoziiert ist.

## Beschreibung

### TECHNISCHES GEBIET

Die vorliegende Offenbarung bezieht sich auf eine Vorrichtung und ein Verfahren zum Überprüfen der Wuchtbarkeit bzw. allgemein des Ist-Zustands von Rotationskomponenten, insbesondere von Rotorblättern, in einer Paarung, um eine Vorhersage zu treffen, ob eine Wuchtbarkeit der Paarung von Rotationskomponenten innerhalb des vorgegebenen Toleranzrahmens möglich ist.

### TECHNISCHER HINTERGRUND

Im Luftfahrbereich werden Rotationskomponenten in verschiedenen Verwendungen verwendet. Beispiele für solche Rotationskomponenten sind Rotorblätter von Hubschraubern, Turbinenschaufeln, etc. Im Zuge der Wartung von Luftfahrzeugen müssen derartige Rotationskomponenten teilweise ausgetauscht werden. Um statische und/oder dynamische Unwuchten im Betrieb zu vermieden, muss das System aus den einzelnen Rotationskomponenten nach der Montage ausgewuchtet werden.

Dazu werden gemäß IETD (Engl.: Interactive Electronic Technical Documentation) beispielsweise vier Heckrotorblätter (als Rotationskomponenten) im Zuge einer solchen Wartung auf einem Hubschrauber aufgebaut. Aufgrund von Störbehebung, zum Beispiels im Rahmen einer TCI (Engl.: Time Compliance Inspection) werden innerhalb der Revision oft Rotorblätter getauscht oder bearbeitet. Ob die aufgebauten Blätter allerdings tatsächlich in dieser Konfiguration in Betrieb genommen werden können, kann üblicherweise erst nach dem ersten Bodenlauf/Blattspurlauf festgestellt werden. Zwar können Unwuchten teilweise durch das Anbringen von Wuchtgewichten an den Rotorblättern ausgeglichen werden. Dies ist allerdings nur in begrenztem Maße möglich, was dazu führen kann, dass eine konkrete Paarung von Rotorblättern nicht zusammen in zulässiger Weise (d.h. insbesondere innerhalb des vorgegebenen Toleranzrahmens) gewuchtet werden kann. Wenn die neu montierte Blattkonfiguration nicht bestehen bleiben kann (z.B., weil sie aufgrund von zu starken geometrischen Abweichungen zusammen nicht mehr zufriedenstellend innerhalb des Toleranzrahmens ausgewuchtet werden kann), ist ein erneuter Umbau/Tausch der Blätter mit erneutem Auswuchten erforderlich. Sollten beispielsweise die vier Rotorblätter im obigen Beispiels nicht miteinander wuchtbar sein, müssen z.B. ein oder zwei Ersatz-Rotorblätter angefordert und montiert werden. Der gesamte Wartungsvorgang kann deshalb sehr arbeits- und zeitintensiv sein. Darüber hinaus gilt jeder Anlassvorgang des Hubschraubers als sogenannter "Cycle" und reduziert die erlaubte Gesamtanzahl der Anlassvorgänge. Diese Cycle betreffen das/die Getriebe, die Transmission, und die Triebwerke als Hauptkomponenten. Es ist somit grundsätzlich wünschenswert, die Anzahl dieser Cycles, die auf das Auswuchten der Rotorblätter zurückzuführen sind, zu reduzieren.

Es besteht derzeit keine Möglichkeit, die Wuchtbarkeit bzw. allgemein des Ist-Zustands einzelner Rotorblätter (oder allgemein von Rotationskomponenten), wenn diese zusammen in einem Rotationssystem wie einem Heckrotor oder Hauptrotor montiert werden sollen, vor der Montage zu überprüfen.

### BESCHREIBUNG

Es kann demgemäß als Aufgabe der Erfindung angesehen werden, den Ist-Zustand von Rotationskomponenten vor der Montage zu ermitteln, um eine zuverlässige Vorhersage zu treffen, ob eine Wuchtbarkeit mindestens zweier (insbesondere gegenüberliegender) Rotationskomponenten möglich ist.

Diese Aufgabe wird durch die Gegenstände der unabhängigen Ansprüche gelöst. Weitere Ausführungsformen ergeben sich aus den abhängigen Ansprüchen sowie aus der nachfolgenden Beschreibung.

Die Erfindung betrifft eine Vorrichtung und ein Verfahren zur Feststellung des Ist-Zustands einer Rotationskomponente in einem Rotationssystem, wobei der Fokus auf die Ermittlung der Schwerpunktlage der Rotationskomponente gelegt wird. Das durch die erfindungsgemäße Vorrichtung und das erfindungsgemäße Verfahren verwendete Prinzip ist ähnlich dem einer Balkenwaage.

Zusammengefasst umfasst die Vorrichtung ein Gestell und einen Aufnahmebalken mit einer Aufnahme, einem ersten drehmomenterzeugenden Element und einer Ablesevorrichtung. Der Aufnahmebalken ist über eine Drehachse mit dem Gestell verbunden.

In einer beispielhaften Konfiguration besitzt das erste drehmomenterzeugende Element ein definiertes Gewicht und befindet sich mit der Ablesevorrichtung und einem einstellbaren Gewicht auf einer Seite des Aufnahmebalkens. Die Aufnahme ist auf einer gegenüberliegenden Seite des Aufnahmebalkens angeordnet. Die Entfernung zur Drehachse kann optional in sämtlichen hierin beschriebenen Ausführungsformen/Konfigurationen der Vorrichtung der tatsächlichen Entfernung zur Drehachse der Rotationskomponente (z.B. von NH90-Heckrotoren) in montiertem Zustand entsprechen der Rotationskomponente entsprechen. Die Aufnahme kann in diesem Fall ein Nachbau eines Rotorkopfes sein, an dem Wuchtgewichte (allgemein Ausgleichsgewichte) angebracht werden können und dadurch einen tatsächlichen Zustand wiedergeben. Die Aufnahme mit der Rotationskomponente und etwaigen Ausgleichsgewichten ergeben somit ein weiteres drehmomenterzeugendes Element.

Um den Ist-Zustand zu bestimmen, besitzt das erste drehmomenterzeugende Element beispielsweise eine einstellbare Gewichtskomponente, die ihre Position zur Drehachse oder ihr definiertes Gewicht verändern kann. Ist das Gewicht der Rotationskomponente in der Aufnahme gleich dem Gewicht des ersten drehmomenterzeugenden Elements (bzw. sind die durch die Gewichte und ihre Verteilungen erzeugten Drehmomente im Betrag gleich groß, aber entgegengerichtet), so gibt die Position bzw. das Gewicht des ersten drehomenterzeugenden Elements über die Ablesevorrichtung den Ist-Zustand der Rotationskomponente wieder. Der Ist-Zustand kann dabei insbesondere mit einer Schwerpunktlage der Rotationskomponente korrespondieren.

Gemäß einem ersten Aspekt wird eine Vorrichtung zum Überprüfen des Ist-Zustands einer Rotationskomponenten in einem Rotationssystem offenbart. Die Vorrichtung umfasst ein Gestell, einen langgestreckten Aufnahmebalken, eine Aufnahme, ein erstes drehmomenterzeugendes Element, und eine Ablesevorrichtung. Der langgestreckte Aufnahmebalken ist über eine Drehachse mit dem Gestell verbunden. Das erste drehmomenterzeugende Element ist an einer ersten Seite des langgestreckten Aufnahmebalkens relativ zu der Drehachse angeordnet und mit dem Aufnahmebalken verbunden. Die Aufnahme ist an einer zweiten Seite des langgestreckten Aufnahmebalkens relativ zu der Drehachse angeordnet und mit dem Aufnahmebalken verbunden. Die Aufnahme ist konfiguriert, die Rotationskomponente mit dem langgestreckten Aufnahmebalken zu verbinden. Das erste drehmomenterzeugende Element ist einstellbar, so dass ein von der ersten Seite auf die Drehachse wirkendes erstes Drehmoment angepasst werden kann. Die Aufnahme ist konfiguriert, ein durch die Rotationskomponente erzeugtes zweites Drehmoment von der zweiten Seite auf die Drehachse zu übertragen. Die Ablesevorrichtung ist konfiguriert, einen mit dem ersten Drehmoment assoziierten Ablesewert anzuzeigen, der mit dem Ist-Zustand der Rotationskomponente assoziiert ist.

Eine Rotationskomponente gemäß der vorliegenden Offenbarung kann beispielsweise ein Rotorblatt, eine Turbinenschaufel, oder jede andere im Betrieb um eine zentrale Achse rotierenden Komponente.

Wie einleitend erwähnt, müssen beispielsweise Rotorblätter eines Hubschraubers von Zeit zu Zeit ersetzt werden. Die neue Anordnung von Rotorblättern muss dann ausgewuchtet werden, um statische und/oder dynamischen Unwuchten zu verhindern oder zumindest so weit zu reduzieren, dass ein sicherer Betrieb möglich ist. Üblicherweise werden dazu die Rotorblätter, beispielsweise vier davon an einem Heckrotor, zunächst an dem Hubschrauber montiert. Beim Wuchtlauf kann sich dann herausstellen, dass die Blattanordnung in der verwendeten Konfiguration nicht ausgewuchtet werden kann, beispielsweise, weil deren Schwerpunktlagen zu weit voneinander abweichen, was große Wuchtgewichte notwendig machen würde, welche nicht zulässig sein können. Die montierten Rotorblätter werden dann durchgetauscht und/oder erneut ersetzt, was allgemein sehr viel Zeit erfordert. Darüber hinaus, wie ebenfalls einleitend erwähnt, gilt jeder Anlassvorgang des Hubschraubers als sogenannter "Cycle" und reduziert somit die erlaubte Gesamtanzahl der Anlassvorgänge. Diese Cycle betreffen das/die Getriebe, die Transmission, und die Triebwerke als Hauptkomponenten.

Wenn jedoch eine ideale Paarung von Rotorblättern (beispielsweis, wenn die Schwerpunktlagen bzw. allgemein die Massenverteilungen von zwei gegenüberliegenden Rotorblättern hinreichend ähnlich sind) verwendet wird, können diese jedoch problemlos innerhalb der Toleranzen ausgewuchtet werden. Eine solche ideale Paarung von Rotorblättern (oder allgemein von Rotationskomponenten; die vorliegenden Beschreibung konzentriert sich zwar hauptsächlich auf Rotorblätter, allerdings sollte erkannt werden, dass die entsprechenden Prinzipien auch auf andere Rotationskomponenten angewendet werden können, da die physikalischen Mechanismen, welche Unwuchten erzeugen, dieselben sind) könnte beispielsweise durch die Ermittlung der Schwerpunktlage zweier gegenüberliegender Rotorblätter ermittelt werden, so dass dann nur noch ein Wuchtlauf erforderlich ist, weil unmittelbar zueinander passende Rotorblätter ausgewählt werden können. Die hierin offenbarte Vorrichtung und das hierin offenbarte Verfahren reduziert somit die Anzahl der notwendigen Cycles (siehe oben), die auf das Auswuchten der Rotorblätter zurückzuführen sind, da der Ist-Zustand bereits vor der Montage beurteilt werden kann und somit Rotorblätter nur dann überhaupt erst montiert und ausgewuchtet werden, wenn bereits im Voraus die grundsätzliche Wuchtbarkeit anhand des Ist-Zustands festgestellt wurde. Unnötige Wuchtläufe/Anlassvorgänge werden somit durch die Erfindung vermieden, was zu einer deutlichen zeitlichen Reduzierung der Arbeitszeit/Prozessdauer führt und damit auch zu einer kostenseitigen Einsparung beiträgt.

Es wird darauf hingewiesen, dass die Begriffe Rotationskomponente und Rotorblatt hierin teilweise synonym verwendet werden. Die entsprechenden Prinzipien gelten jeweils für Rotorblätter im Speziellen und für Rotationskomponenten im Allgemeinen.

Die konkrete Bestimmung einer Schwerpunktlage kann kompliziert sein. Die erfindungsgemäße Vorrichtung geht deshalb einen einfacheren Weg. Das durch die erfindungsgemäße Vorrichtung verwendete Prinzip ist ähnlich dem einer Balkenwaage. Der langgestreckte Aufnahmebalken dient dabei zum einen der Aufnahme der zu untersuchenden Rotationskomponente und zum anderen dem Ermitteln eines mit der Schwerpunktlage bzw. allgemein eines durch die Rotationskomponente in der Schwerkraft erzeugten Drehmoments (d.h. des zweiten Drehmoments) an der Drehachse, an welcher die Rotationskomponente über den Aufnahmebalken befestigt ist. Der Aufnahmebalken ist drehbar an dem Gestell gelagert, so dass er sich relativ zu dem Gestell um diese Drehachse drehen kann. Dabei verläuft die Drehachse zumindest im Wesentlichen senkrecht zu der Längserstreckung des Aufnahmebalkens. An einer Seiten dieser Drehachse (der ersten Seite) ist die Aufnahme zum Befestigen der Rotationskomponente mit dem Aufnahmebalken verbunden.

Die Aufnahme kann einer Aufnahme entsprechen, an welcher die Rotationskomponente im normalen Betrieb befestigt wird, wie eine entsprechende Nabe. Mit anderen Worten kann die Aufnahme im Falle von Rotorblättern beispielsweise, wie bereits weiter oben dargelegt, ein Nachbau eines Rotorkopfes sein, an dem Wuchtgewichte (allgemein Ausgleichsgewichte) angebracht werden können und dadurch einen tatsächlichen Zustand wiedergeben.

Auf der gegenüberliegenden Seite der Drehachse (der zweiten Seite) ist mindestens ein drehmomenterzeugendes Element angebracht. Wenn das durch das drehmomenterzeugende Element erzeugte Drehmoment (d.h. das erste Drehmoment) in der Drehachse gleich dem durch das Rotorblatt eingebrachte entgegengesetzte Drehmoment (zweites Drehmoment) ist, ähnlich einer Wippe, ist die Vorrichtung, bzw. der Aufnahmebalken, im Gleichgewicht. In jedem physikalischen System wirkt kein effektives Drehmoment in einer Drehachse, wenn die Summe der linksdrehenden Drehmomente gleich der Summe der rechtsdrehenden Drehmomente in der Drehachse ist. Das durch die Rotationskomponente eingebrachte Drehmoment (zweites Drehmoment) korreliert unmittelbar mit dessen Masseverteilung.

Das drehmomenterzeugende Element ist einstellbar, d.h. das durch dieses in die Drehachse eingebrachte Drehmoment kann angepasst werden und ein entsprechender Parameter, der Ablesewert, über die Ablesevorrichtung abgelesen werden. Das drehmomenterzeugende Element kann dabei jedes geeignete Element, wie beispielsweise (bevorzugt) eine Masse, dessen Abstand zur Drehachse variiert werden kann, eine Torsionsfeder, deren Rückstellkraft und damit das durch sie eingebrachte Drehmoment/Rückstellmoment variiert werden kann, ein entsprechender Elektromotor, der mit der Drehachse verbunden ist und dessen anliegendes Drehmoment abgelesen werden kann, oder jedes andere geeignete Element, sein. Die vorstehende Aufzählung ist lediglich beispielhafter Natur und nicht einschränkend.

Der so erzeugte Ablesewert ist unmittelbar mit dem Ist-Zustand (beispielsweise einer Schwerpunktlage oder einer Massenverteilung) der Rotationskomponente assoziiert und kann beispielsweise zur Bestimmung der Wuchtbarkeit herangezogen werden.

Gemäß einer Ausführungsform ist die Vorrichtung konfiguriert, eine gemeinsame Wuchtbarkeit von mindestens zwei Rotationskomponenten zu überprüfen. Durch Vergleichen eines bei Betrachtung einer ersten Rotationskomponente erzeugten Ablesewerts (d.h. eines Ist-Zustands der ersten Rotationskomponente) mit einem bei Betrachtung einer zweiten Rotationskomponente (100) erzeugten Ablesewert (d.h. eines Ist-Zustands der zweiten Rotationskomponente), jeweils wenn die Vorrichtung im Gleichgewicht ist, ein gemeinsamer Wuchtbarkeitszustand der ersten Rotationskomponente und der zweiten Rotationskomponente in einer Paarung bestimmt werden kann.

Wenn nacheinander mehrere Rotationskomponenten mit der erfindungsgemäßen Vorrichtung untersucht werden, d.h. deren Ablesewert, bei welchem der Aufnahmebalken im Gleichgewicht ist, ermittelt wird, können miteinander wuchtbare Rotationskomponenten (z.B. gegenüberliegende Rotorblätter) ermittelt werden, indem diejenigen Rotationskomponenten ausgewählt werden, deren Ablesewerte nahe genug beieinander liegen. Dies kann beispielsweise erfolgen, indem Rotationskomponenten ausgewählt werden, deren Differenz im Ablesewert unter einem festgelegten Schwellenwert liegt. Ferner kann auch unmittelbar überprüft werden, ob ein konkretes Paar Rotationskomponenten miteinander ausgewuchtet werden können, indem versucht wird, den Ablesewert einer zweiten Rotationskomponente durch Anbringen von Wuchtscheiben an der dem Rotorkopf nachgebildeten Aufnahme nahe genug an den Ablesewert einer ersten Rotationskomponente zu bringen. Wenn dies mit Wuchtscheiben, deren Gewicht und Anzahl innerhalb der zulässigen Grenzen liegt, gelingt, kann das konkrete Paar von Rotationskomponenten prinzipiell miteinander ausgewuchtet werden.

Die erfindungsgemäße Vorrichtung ermöglicht somit in einfacher Weise, zueinanderpassende Paarungen von beispielsweise Rotorblättern eines Hubschraubers vor der Montage der Rotorblätter an dem Hubschrauber zu ermitteln, so dass anschließend nur noch ein Blattspurlauf durchgeführt werden muss und eine mehrfache Montage und Demontage von Rotorblättern an dem Hubschrauber entfällt.

Gemäß einer Ausführungsform umfasst das erste drehmomenterzeugende Element ein relativ zu der Drehachse entlang des Aufnahmebalkens verschiebbares Gewicht.

Ein solches Gewicht kann beispielsweise ein entlang einer mit dem Aufnahmebalken parallelen Achse verschiebbares Gewicht sein. Durch Verschieben des Gewichts kann das durch das drehmomenterzeugende Element eingebrachte erste Drehmoment unmittelbar angepasst werden. Der Abstand des Gewichts zu der Drehachse kann dann beispielsweise anhand einer Skala als Ablesevorrichtung abgelesen werden und dient als Ablesewert. Das Gewicht wird mit angebrachter Rotationskomponente so lange verschoben, bis der Aufnahmebalken im Gleichgewicht ist und der Ablesewert dann von der Skala abgelesen oder ermittelt.

Die Ablesung und das Verschieben können dabei optional auch automatisiert erfolgen. Beispielsweise könnte das Gewicht mittels eines Linearaktuators verschiebbar sein, der durch eine elektronische Steuerung gesteuert wird und dessen Position entweder unmittelbar (z.B. mittels eines Encoders) oder auch über eine Skala (z.B. mittels einer Kamera, welche die Skala beobachtet) abgelesen/ermittelt werden.

Gemäß einer weiteren Ausführungsform korrespondiert der Ablesewert mit einem Abstand des verschiebbaren Gewichts zu der Drehachse.

Gemäß einer weiteren Ausführungsform weist die Vorrichtung ferner ein zweites drehmomenterzeugendes Element auf.

Gemäß einer weiteren Ausführungsform ist das zweite drehmomenterzeugende Element ein auf dem Aufnahmebalken relativ zu der Drehachse fixiertes drehmomenterzeugendes Element.

Das zweite drehmomenterzeugende Element kann beispielsweise ein auf der ersten Seite der Drehachse angebrachtes Gewicht sein. Das Gewicht kann an einem Ende oder an jeder anderen geeigneten Position zwischen dem Ende und der Drehachse angebracht sein und dient dazu, dass das erste Drehmoment (d.h., das Drehmoment, welches dem durch die Rotationskomponente erzeugten Drehmoment entgegenwirkt) bereits grob in Richtung der zu überprüfenden Rotationskomponente gebracht wird, so dass der Einstellbereich des ersten drehmomenterzeugenden Elements genügt, um den Aufnahmebalken ins Gleichgewicht zu bringen.

Gemäß einer weiteren Ausführungsform ist das zweite drehmomenterzeugende Element ein Gewicht, das so dimensioniert ist, dass die Vorrichtung bei Betrachtung einer idealen Rotationskomponente ohne eine durch das erste drehmomenterzeugende Element erzeugte Komponente des ersten Drehmoments im Gleichgewicht wäre.

Mit anderen Worten, das zweite drehmomenterzeugende Element ist in dieser Ausführungsform ein Element, dessen Produkt aus Masse und Abstand zur Drehachse der Summe der Produkte der jeweiligen Massen und Abstände zur Drehachse aller Massenpunkte einer durchschnittlichen Rotationskomponente, d.h. dem Integral der Längsmassenverteilung einer solchen durchschnittlichen Rotationskomponente über die Länge der Rotationskomponente, entspricht. Auf diese Weise entspricht das erste Drehmoment nach Montage der Rotationskomponente auf der Vorrichtung bereits ungefähr dem durch die Rotationskomponente erzeugten entgegenwirkenden Drehmoment in der Drehachse und das erste drehmomenterzeugende Element kann dann zur Feinbestimmung verwendet werden.

Gemäß einer weiteren Ausführungsform ist die Aufnahme konfiguriert, ein Rotorblatt als Rotationskomponente aufzunehmen.

Insbesondere kann die Aufnahme ähnlich einem Rotorkopf eines solchen Rotorblatts ausgestaltet sein, welcher mit dem Aufnahmebalken fest verbunden ist.

Gemäß einer weiteren Ausführungsform ist das erste drehmomenterzeugende Element ein elektronisch einstellbares drehmomenterzeugendes Element.

Ein solches Element kann beispielsweise ein entsprechendes über einen Linearaktuator verschiebbares Gewicht oder ein entsprechender mit der Drehachse verbundener Elektromotor sein, wie bereits oben beschrieben.

Gemäß einem zweiten Aspekt wird ein Verfahren zum Überprüfen eines Ist-Zustands einer Rotationskomponente in einem Rotationssystem offenbart. Das Verfahren wird unter Verwendung einer Vorrichtung gemäß einer der hierin beschriebenen Ausführungsformen durchgeführt. Das Verfahren umfasst das Montieren einer ersten Rotationskomponente auf dem langgestreckten Aufnahmebalken durch Verbinden der ersten Rotationskomponente mit der Aufnahme, das Einstellen des ersten drehmomenterzeugenden Elements, so dass der Aufnahmebalken in einem Drehmomentgleichgewicht ist, das Ablesen des Ablesewerts von der Ablesevorrichtung, um einen mit der ersten Rotationskomponente assoziierten ersten Ablesewert zu erhalten, und das Entfernen der ersten Rotationskomponente von dem Aufnahmebalken. Der Ablesewert ist mit dem Ist-Zustand der ersten Rotationskomponente assoziiert.

Das Verfahren wurde bereits mit Bezug auf die Vorrichtung beschrieben Die einzelnen Verfahrensschritte werden deshalb im Folgenden der Kürze halber und um unnötige Wiederholungen zu vermeiden lediglich kurz beschrieben.

In einem ersten Schritt wird eine erste Rotationskomponente auf dem Aufnahmebalken angebracht und montiert. Beispielsweise kann ein erstes Rotorblatt auf den Aufnahmebalken aufgelegt und an der Aufnahme, welche einem Rotorkopf entspricht, befestigt werden.

In einem nächsten Schritt wird dann das erste drehmomenterzeugende Element so eingestellt, dass der Aufnahmebalken in Gleichgewicht ist. Dazu kann beispielsweise sowohl an dem Aufnahmebalken als auch an dem Gestell der Vorrichtung eine Markierung in der Gleichgewichtsposition angebracht sein und das erste drehmomenterzeugende Element wird so lange verstellt (z.B. durch Verschieben eines entsprechenden Gewichts entlang des Aufnahmebalkens auf der dem Rotorblatt abgewandten Seite) bis die beiden Markierungen übereinstimmen.

Anschließend wird der Ablesewert (z.B. der Abstand eines verschiebbaren Gewichts von der Drehachse) an der Ablesevorrichtung abgelesen und die erste Rotationskomponente von der Vorrichtung entfernt. Der erz

Gemäß einer Ausführungsform umfasst das Verfahren ferner das Montieren einer zweiten Rotationskomponente auf dem langgestreckten Aufnahmebalken durch Verbinden der zweiten Rotationskomponente mit der Aufnahme, das Einstellen des ersten drehmomenterzeugenden Elements, so dass der Aufnahmebalken in einem Drehmomentgleichgewicht ist, und das Ablesen des Ablesewerts von der Ablesevorrichtung, um einen mit der zweiten Rotationskomponente assoziierten zweiten Ablesewert zu erhalten, der mit dem Ist-Zustand der zweiten Rotationskomponenten assoziiert ist. Das Verfahren umfasst dann das Vergleichen des ersten Ablesewerts mit dem zweiten Ablesewert, und das Bestimmen, ob die erste Rotationskomponente zusammen mit der zweiten Rotationskomponente auswuchtbar ist, wenn diese zusammen montiert werden, basierend auf dem Vergleich des ersten Ablesewerts mit dem zweiten Ablesewert.

Insbesondere werden die vorstehende mit Bezug auf die erste Rotationskomponente beschriebenen Schritte ebenfalls mit der zweiten Rotationskomponente (z.B. mit einem zweiten Rotorblatt) wiederholt und dessen Ablesewert bestimmt. Der Ablesewert der zweiten Rotationskomponente ist wiederum mit deren Ist-Zustand assoziiert.

Durch Vergleichen der Ablesewerte kann dann bestimmt werden, ob die beiden Rotationskomponenten (z.B. Rotorblätter) miteinander innerhalb der Grenzwerte ausgewuchtet werden können, wenn diese an dem Hubschrauber montiert werden.

Gemäß einer Ausführungsform hat das Bestimmen, ob die erste Rotationskomponente zusammen mit der zweiten Rotationskomponente auswuchtbar ist, ein positives Ergebnis, wenn der Absolutbetrag einer Abweichung zwischen dem ersten Ablesewert und dem zweiten Ablesewert unter einem Schwellenwert liegt.

Der Schwellenwert kann beispielsweise so festgelegt sein, dass zwei Rotorblätter zueinander entweder gar nicht mehr ausgewuchtet werden müssen oder beispielsweise innerhalb der zulässigen Grenzen mittels Wuchtscheiben ausgewichtet werden können.

Zusammenfassend wird durch die Erfindung eine Vorrichtung und ein Verfahren bereitgestellt, welche im Allgemeinen das Bestimmen eines Ist-Zustands, welcher beispielsweise mit einer Schwerpunktlage oder einer Massenverteilung korrespondiert, bzw. im Speziellen das Bestimmen der prinzipiellen Wuchtbarkeit von mindestens zwei Rotationskomponenten, wie beispielsweise Rotorblättern, zueinander in einfacher Weise im Voraus, d.h. vor der tatsächlichen Montage an dem Hubschrauber, ermöglicht. Dadurch werden beispielsweise wiederholte Montagen, Demontagen und Wuchtläufe verschiedener Rotorblätter an einem Hubschrauber verhindert, was den Zeitbedarf beim Service so wie die Anzahl der erforderlichen Cycles deutlich reduziert.

### KURZBESCHREIBUNG DER FIGUREN

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- **Fig. 1**: Eine schematische Ansicht einer Vorrichtung zum Überprüfen einer gemeinsamen Wuchtbarkeit von mindestens zwei Rotationskomponenten in einem Rotationssystem am Beispiel von Heckrotorblättern von Hubschraubern.
- **Fig. 2**: Ein Flussdiagramm eines Verfahrens zum Überprüfen einer gemeinsamen Wuchtbarkeit von mindestens zwei Rotationskomponenten in einem Rotationssystem, welches beispielsweise mit der Vorrichtung aus Fig. 1 durchgeführt werden kann.

### DETAILLIERTE BESCHREIBUNG

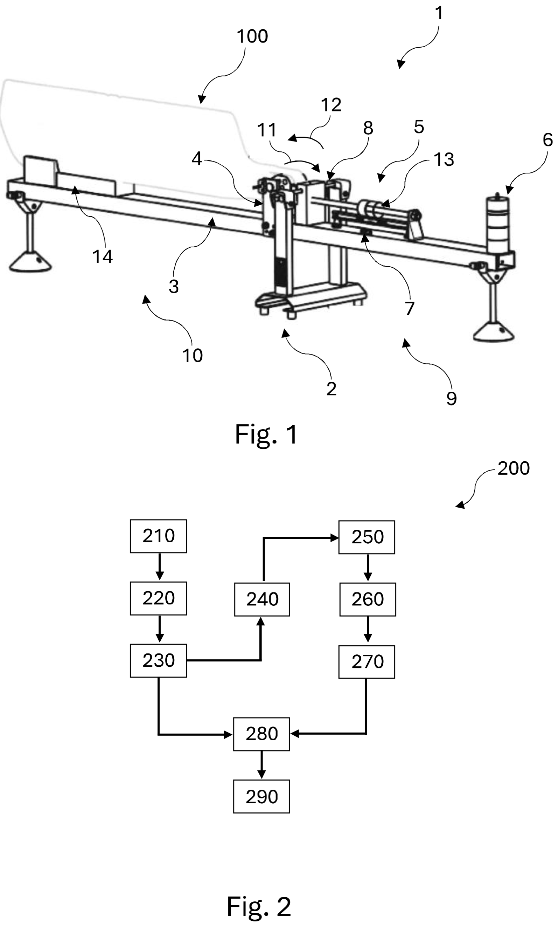

Fig. 1 zeigt eine beispielhafte Vorrichtung 1 zum Überprüfen einer gemeinsamen Wuchtbarkeit von mindestens zwei Rotationskomponenten 100 in Form von Rotorblättern 100 eines Heckrotors eines Hubschraubers. Es sollte jedoch beachtet werden, dass die Vorrichtung 1 bei entsprechender Anpassung auch für andere Rotationskomponenten 100 verwendet werden kann. Beispielsweise kann die Vorrichtung 1 bei entsprechender Skalierung auch für Hauptrotorblätter eines Hubschraubers, für Turbinenschaufeln, etc. verwendet werden.

Die Vorrichtung 1 umfasst ein Gestell 2. Ein langgestreckter Aufnahmebalken 3 ist an dem Gestell 2 über eine Drehachse 8 befestigt.

Eine erste Seite 9 (in Fig. 1 die Seite rechts der Drehachse 8) umfasst ein erstes drehmomenterzeugendes Element 5 und ein zweites drehmomenterzeugendes Element 6. Das erste drehmomenterzeugende Element 5 und das zweite drehmomenterzeugende Element 6 erzeugen in der Drehachse 8 jeweils ein rechtsdrehendes erstes Drehmoment 11.

Eine zweite Seite 10 (in Fig. 1 die Seite links der Drehachse 8) umfasst eine Aufnahme 4, welche in der dargestellten Konfiguration ähnlich einem Rotorkopf für das Rotorblatt 100 ausgestaltet ist und fest mit dem Aufnahmebalken 3 verbunden ist. Ferner ist eine optionale Auflage 14 für das Rotorblatt 100 vorgesehen, welche beispielsweise dazu dienen kann, Vibrationen zu vermeiden und das Gewicht des Rotorblatts 100 besser zu stützen, welches ansonsten voll von der Aufnahme 4 getragen werden müsste. Das Rotorblatt 100 erzeugt in der Drehachse ein dem ersten Drehmoment 11 entgegengesetztes, d.h. linksdrehendes, zweites Drehmoment 12.

Das erste drehmomenterzeugende Element 5 umfasst in der dargestellten Konfiguration ein relativ zu der Drehachse 8 entlang des Aufnahmebalkens 3 linear verschiebbares Gewicht 13. Durch das Verschieben des Gewichts 13 kann das (rechtsdrehende) erste Drehmoment 11, welches, wie ersichtlich, durch die Elemente 5, 6 erzeugt wird, angepasst werden. Es sollte allerdings beachtet werden, dass das erste drehmomenterzeugende Element 5 auch in jeder anderen geeigneten Art ausgestaltet sein kann, wie hierin weiter oben beschrieben. Ferner sollte beachtet werden, dass das zweite drehmomenterzeugende Element 6 in einigen Konfiguration obsolet sein kann und somit entfallen kann und als optional zu betrachten ist.

Das zweite drehmomenterzeugende Element 6 dient dazu, das rechtsdrehende erste Drehmoment 11 bereits grob in den Bereich des durch ein durchschnittliches Rotorblatt 100 erzeugtes linksdrehendes zweites Drehmoment 12 zu bringen, so dass der Einstellbereich des ersten drehmomenterzeugenden Elements 5 genügt, um die Vorrichtung 1 ins Gleichgewicht zu verstellen.

Die Vorrichtung 1 weist ferner eine Ablesevorrichtung 7 auf, welche in der dargestellten Konfiguration als Ableseskala für die Längsposition des Gewichts 13 ausgeführt ist. Über die Ablesevorrichtung kann Position des Gewichts 13 als Ablesewert abgelesen werden.

Das konkrete Vorgehen beim Überprüfen der gemeinsamen Wuchtbarkeit mehrerer Rotationskomponenten/Rotorblätter 100 in einem Rotationssystem mit der Vorrichtung 1 aus Fig. 1 wird im Folgenden mit Bezug auf das Flussdiagramm des Verfahrens 200 der Fig. 2 erläutert. Dabei wird weiterhin auch Bezug auf die Fig. 1 genommen.

Das Verfahren 200 beginnt in Schritt 210 mit dem Montieren einer ersten Rotationskomponente 100 auf dem langgestreckten Aufnahmebalken 3, insbesondere auf der zweiten Seite 10 des Aufnahmebalkens 30. Dazu wird die Rotationskomponente 100 auf den Aufnahmebalken 3 (z.B. auf die Auflage 14) aufgelegt und mit der Aufnahme 4 verbunden, z.B. verschraubt.

Anschließend wird in einem Schritt 220 das erste drehmomenterzeugende Element 5 so eingestellt, dass der Aufnahmebalken 3 im Gleichgewicht ist. Mit anderen Worten, das erste drehmomenterzeugende Element 5 wird so eingestellt, dass das erste Drehmoment 11 und das zweite Drehmoment 12 betragsmäßig gleich groß aber entgegengesetzt sind, sich also das durch das erste drehmomenterzeugende Element 5 (und das (optionale) zweite drehmomenterzeugende Element 6) erzeugte rechtdrehende Drehmoment 11 mit dem durch die Rotationskomponente 100 erzeugten linksdrehenden Drehmoment 12 ausgleicht/aufhebt. In der in Fig. 1 dargestellten Konfiguration der Vorrichtung 1 kann dies beispielsweise durch Verschieben des verschiebbaren Gewichts 13 erfolgen. In anderen Ausgestaltungen kann diese jedoch auch in anderer Weise erfolgen, wie hierin weiter oben beschrieben.

Wenn der Aufnahmebalken 3 im Gleichgewicht ist, wird in einem Schritt 230 ein Ablesewert von der Ablesevorrichtung 7 abgelesen bzw. erfasst, beispielsweise, indem der entsprechende Wert von einer Skala abgelesen wird oder elektronisch erfasst wird. Dieser Ablesewert ist indikativ für die Gleichgewichtsposition (bzw. für eine nötiges Gegendrehmoment, um das in der Drehachse 8 durch die Rotationskomponente 100 verursachte Drehmoment zu kontern) und kann beispielsweise in der Konfiguration der Vorrichtung 1 von Fig. 1 einem Abstand des verschiebbaren Gewichts 13 entsprechen. In andere Ausgestaltungen kann der Ablesewert aber beispielsweise unmittelbar ein Messwert für das Drehmoment oder jeder andere geeignete Ablesewert sein.

Nachdem der Ablesewert der ersten Rotationskomponenten 100 erfasst wurde, wird in einem Schritt 240 die erste Rotationskomponente 100 von der Vorrichtung 1 bzw. von dessen Aufnahmebalken 3 wieder entfernt und in Schritt 250 eine zweite Rotationskomponente 100 auf dem langgestreckten Aufnahmebalken 3 montiert. Die Schritte 250 bis 270 entsprechen dabei den Schritten 210 bis 230, die bereits oben beschrieben wurden, werden allerdings mit der zweiten Rotationskomponente 100 durchgeführt. Insbesondere wird analog zu Schritt 220 in Schritt 260 das erste drehmomenterzeugende Element 5 wiederum mit der montierten zweiten Rotationskomponente 100 so eingestellt, dass der Aufnahmebalken 3 im Gleichgewicht ist und in Schritt 270 wird, analog zu Schritt 230, ein Ablesewert bezüglich der zweiten Rotationskomponente 100 erfasst/abgelesen.

In Schritt 280 werden dann der erste Ablesewert für die erste Rotationskomponente 100 aus Schritt 230 und der zweite Ablesewert für die zweite Rotationskomponente 100 aus Schritt 270 verglichen.

Basierend auf dem Vergleich wird dann in Schritt 290 bestimmt, ob die erste Rotationskomponente 100 zusammen mit der zweiten Rotationskomponente 100 auswuchtbar ist, wenn diese zusammen verwendet werden. Mit anderen Worten wird also bestimmt, ob beispielsweise ein erstes Rotorblatt 100 zusammen mit einem zweiten Rotorblatt 100 in einem Rotationssystem (z.B. einer Rotoranordnung aus mindestens zwei Rotorblättern 100) gewuchtet werden können, oder ob diese in ihren Messwerten zu weit auseinanderliegen. Eine solche Bestimmung kann beispielsweise erfolgen, indem bestimmt wird, ob der Absolutbetrag der Differenz der Ablesewerte einen Schwellenwert überschreitet oder nicht. Im ersteren Fall wäre das Ergebnis negativ, d.h. die beiden Rotationskomponenten 100 können zusammen nicht verwendet werden. Im letzteren Fall, d.h. wenn der Absolutbetrag der Differenz den Schwellenwert nicht überschreitet, sind die beiden Rotationskomponenten 100 zur gemeinsamen Montage geeignet, da sie zusammen ausgewuchtet werden können. Es könnte optional auch versucht werden, an einer oder beiden der Rotationskomponenten 100 Wuchtscheiben oder ähnliches innerhalb zulässiger Grenzen anzubringen, um zu beurteilen, ob die Ablesewerte in dieser Weise nahe genug angeglichen werden können, wenn diese den Schwellenwert überschreiben.

Es sollte erkannt werden, dass das Verfahren 200, obwohl vorstehend für zwei Rotationskomponenten 100 beschrieben, auch auf mehr als zwei Rotationskomponenten 100 angewendet werden kann, z.B. vier Rotorblätter 100 eines Heckrotors, etc. Ferner sollte beachtet werden, dass es sich bei der Bestimmung des Absolutbetrags der Differenz lediglich um ein Beispiel handelt und auch andere Kriterien angewendet werden können. Beispielsweise könnten in einem Fall mit mehr als zwei Rotorblättern 100 die wirkenden resultierenden Kräfte komplexer sein. Solche Fälle könnten beispielsweise mit Hilfe eines physikalischen Modells oder mit Maschinenlerntechniken-/Algorithmen, oder auf jede andere geeignete Weise beurteilt werden.

Insgesamt liefern die Vorrichtung 1 und das Verfahren 200 eine Möglichkeit, die prinzipielle Auswuchtbarkeit individueller Rotationskomponenten 100, die in einem gemeinsamen Rotationssystem verwendet werden sollen, wie z.B. Rotorblätter 100 eines Rotors, vor der Montage und dem ersten Bodenlauf zu beurteilen, so dass miteinander nicht passende Rotationskomponenten 100 gar nicht erst zusammen montiert werden, wodurch wiederholte Montagen/Demontagen und Bodenläufe vermieden werden und dadurch der Zeitaufwand deutlich reduziert wird.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHENLISTE

- 1: Vorrichtung
- 2: Gestell
- 3: langgestreckter Aufnahmebalken
- 4: Aufnahme
- 5: erstes drehmomenterzeugendes Element
- 6: zweites drehmomenterzeugendes Element, Gewicht
- 7: Ablesevorrichtung
- 8: Drehachse
- 9: erste Seite (des Aufnahmebalkens)
- 10: zweite Seite (des Aufnahmebalkens)
- 11: erstes Drehmoment
- 12: zweites Drehmoment
- 13: verschiebbares Gewicht
- 14: Auflage
- 100: Rotationskomponente, Rotorblatt
- 200: Verfahren
- 210: Montieren einer ersten Rotationskomponente
- 220: Einstellen des ersten drehmomenterzeugenden Elements
- 230: Ablesen des Ablesewerts
- 240: Entfernen der ersten Rotationskomponente
- 250: Montieren einer zweiten Rotationskomponente
- 260: Einstellen des ersten drehmomenterzeugenden Elements
- 270: Ablesen des Ablesewerts
- 280: Vergleichen der Ablesewerte
- 290: Bestimmen des Wuchtbarkeitszustands in Paarung

## Patentansprüche

1. Vorrichtung (1) zum Überprüfen eines Ist-Zustands einer Rotationskomponente (100) in einem Rotationssystem, die Vorrichtung (1) umfassend:
ein Gestell (2);
einen langgestreckten Aufnahmebalken (3);
eine Aufnahme (4);
ein erstes drehmomenterzeugendes Element (5); und
eine Ablesevorrichtung (7);
wobei der langgestreckte Aufnahmebalken (3) über eine Drehachse (8) mit dem Gestell (2) verbunden ist;
wobei das erste drehmomenterzeugende Element (5) an einer ersten Seite (9) des langgestreckten Aufnahmebalkens (3) relativ zu der Drehachse (8) angeordnet ist und mit dem Aufnahmebalken (3) verbunden ist;
wobei die Aufnahme (4) an einer zweiten Seite (10) des langgestreckten Aufnahmebalkens (3) relativ zu der Drehachse (8) angeordnet ist und mit dem Aufnahmebalken (3) verbunden ist;
wobei die Aufnahme (4) konfiguriert ist, die Rotationskomponente (100) mit dem langgestreckten Aufnahmebalken (3) zu verbinden;
wobei das erste drehmomenterzeugende Element (5) einstellbar ist, so dass ein von der ersten Seite (9) auf die Drehachse (8) wirkendes erstes Drehmoment (11) angepasst werden kann;
wobei die Aufnahme (4) konfiguriert ist, ein durch die Rotationskomponente (100) erzeugtes zweites Drehmoment (12) von der zweiten Seite (10) auf die Drehachse (8) zu übertragen; und
wobei die Ablesevorrichtung (7) konfiguriert ist, einen mit dem ersten Drehmoment (11) assoziierten Ablesewert anzuzeigen, der mit dem Ist-Zustand der Rotationskomponente assoziiert ist.

2. Vorrichtung (1) gemäß Anspruch 1, wobei die Vorrichtung konfiguriert ist, eine gemeinsame Wuchtbarkeit von mindestens zwei Rotationskomponenten (100) zu überprüfen; und
wobei durch Vergleichen eines bei Betrachtung einer ersten Rotationskomponente (100) erzeugten Ablesewerts mit einem bei Betrachtung einer zweiten Rotationskomponente (100) erzeugten Ablesewert, jeweils wenn die Vorrichtung (1) im Gleichgewicht ist, ein gemeinsamer Wuchtbarkeitszustand der ersten Rotationskomponente (100) und der zweiten Rotationskomponente (100) in einer Paarung bestimmt werden kann.

3. Vorrichtung (1) nach Anspruch 1 oder 2, wobei das erste drehmomenterzeugende Element (5) ein relativ zu der Drehachse (8) entlang des Aufnahmebalkens (3) verschiebbares Gewicht (13) umfasst.

4. Vorrichtung (1) nach Anspruch 3, wobei der Ablesewert mit einem Abstand des verschiebbaren Gewichts (13) zu der Drehachse (8) korrespondiert.

5. Vorrichtung (1) nach einem der vorstehenden Ansprüche, ferner aufweisend ein zweites drehmomenterzeugendes Element (6).

6. Vorrichtung (1) nach Anspruch 5, wobei das zweite drehmomenterzeugende Element (6) ein auf dem Aufnahmebalken (3) relativ zu der Drehachse (8) fixiertes drehmomenterzeugendes Element (6) ist.

7. Vorrichtung (1) nach Anspruch 6, wobei das zweite drehmomenterzeugende Element (6) ein Gewicht ist, das so dimensioniert ist, dass die Vorrichtung (1) bei Betrachtung einer idealen Rotationskomponente (100) ohne eine durch das erste drehmomenterzeugende Element (5) erzeugte Komponente des ersten Drehmoments (11) im Gleichgewicht wäre.

8. Vorrichtung (1) nach einem der vorstehenden Ansprüche, wobei die Aufnahme (4) konfiguriert ist, ein Rotorblatt als Rotationskomponente (100) aufzunehmen.

9. Vorrichtung (1) nach einem der vorstehenden Ansprüche, wobei das erste drehmomenterzeugende Element (5) ein elektronisch einstellbares drehmomenterzeugendes Element (5) ist.

10. Verfahren (200) zum Überprüfen eines Ist-Zustands einer Rotationskomponente (100) in einem Rotationssystem unter Verwendung einer Vorrichtung nach einem der vorstehenden Ansprüche, das Verfahren (200) umfassend:
Montieren (210) einer ersten Rotationskomponente (100) auf dem langgestreckten Aufnahmebalken (3) durch Verbinden der ersten Rotationskomponente (100) mit der Aufnahme (4);
Einstellen (220) des ersten drehmomenterzeugenden Elements (5), so dass der Aufnahmebalken (3) in einem Drehmomentgleichgewicht ist;
Ablesen (230) des Ablesewerts von der Ablesevorrichtung (7), um einen mit der ersten Rotationskomponente (100) assoziierten ersten Ablesewert zu erhalten, der mit dem Ist-Zustand der ersten Rotationskomponente assoziiert ist; und
Entfernen (240) der ersten Rotationskomponente (100) von dem Aufnahmebalken (3).

11. Verfahren (200) nach Anspruch 10, wobei das Verfahren (200) dazu dient, eine gemeinsame Wuchtbarkeit von mindestens zwei Rotationskomponenten (100) zu überprüfen;
wobei das Verfahren (200) ferner umfasst:
Montieren (250) einer zweiten Rotationskomponente (100) auf dem langgestreckten Aufnahmebalken (3) durch Verbinden der zweiten Rotationskomponente (100) mit der Aufnahme (4);
Einstellen (260) des ersten drehmomenterzeugenden Elements (5), so dass der Aufnahmebalken (3) in einem Drehmomentgleichgewicht ist;
Ablesen (270) des Ablesewerts von der Ablesevorrichtung (7), um einen mit der zweiten Rotationskomponente (100) assoziierten zweiten Ablesewert zu erhalten, der mit dem Ist-Zustand der zeiten Rotationskomponente (100) assoziiert ist;
Vergleichen (280) des ersten Ablesewerts mit dem zweiten Ablesewert; und
Bestimmen (290), ob die erste Rotationskomponente (100) zusammen mit der zweiten Rotationskomponente (100) auswuchtbar ist, wenn diese zusammen montiert werden, basierend auf dem Vergleich des ersten Ablesewerts mit dem zweiten Ablesewert.

12. Verfahren (200) nach Anspruch 11, wobei das Bestimmen (290), ob die erste Rotationskomponente (100) zusammen mit der zweiten Rotationskomponente (100) auswuchtbar ist, ein positives Ergebnis hat, wenn der Absolutbetrag einer Abweichung zwischen dem ersten Ablesewert und dem zweiten Ablesewert unter einem Schwellenwert liegt.
